# EUROPÄISCHE PATENTSCHRIFT

(11) **EP 2 152 762 B1**
(45) Veröffentlichungstag und Bekanntmachung des Hinweises auf die Patenterteilung: **23.11.2011**
(21) Anmeldenummer: 08736409.7
(22) Anmeldetag: 21.04.2008
(51) Int. Cl.: C08F 8/46, C08F 10/10

(54) **VERFAHREN ZUR HERSTELLUNG VON EN-ADDUKTEN MITTELS MIKROWELLENSTRAHLUNG**
METHOD FOR THE PRODUCTION OF ENE ADDUCTS BY MEANS OF MICROWAVE RADIATION
PROCÉDÉ DE PRODUCTION DE PRODUITS D'ADDITION D'ÈNES AU MOYEN D'UN RAYONNEMENT AVEC DES MICRO-ONDES

(30) Priorität: 27.04.2007 EP 07107141
(43) Veröffentlichungstag der Anmeldung: 17.02.2010
(73) Patentinhaber: BASF SE, 67056 Ludwigshafen (DE)
(72) Erfinder: HANEFELD, Phillip, 69115 Heidelberg (DE); PILGER, Christian, 67063 Ludwigshafen (DE); KÜHLING, Klaus, 67158 Ellerstadt (DE)
(86) Internationale Anmeldenummer: PCT/EP2008/054784
(87) Internationale Veröffentlichungsnummer: WO 2008/132083

(56) Entgegenhaltungen:
- LAURENT, REGIS ET AL: "Specific activation by microwaves : myth or reality?" JOURNAL OF ORGANIC CHEMISTRY , 57(26), 7099-102 CODEN: JOCEAH; ISSN: 0022-3263, 1992, XP002491120 in der Anmeldung erwähnt
- MAJETICH G ET AL: "Applications of microwave-accelerated organic synthesis" RADIATION PHYSICS AND CHEMISTRY, ELSEVIER SCIENCE PUBLISHERS BV., AMSTERDAM, NL, Bd. 45, Nr. 4, 1. April 1995 (1995-04-01), Seiten 567-579, XP004051596 ISSN: 0969-806X
- GARRIGUES, BERNARD ET AL: "Microwave-assisted carbonyl Diels-Alder and carbonyl-ene reactions supported on graphite" LIEBIGS ANNALEN , (5), 743-744 CODEN: LANAEM; ISSN: 0947-3440, 1996, XP002491121
- GIGUERE, RAYMOND J. ET AL: "Studies on tandem ene/intramolecular Diels-Alder reactions" TETRAHEDRON LETTERS , 28(52), 6553-6 CODEN: TELEAY; ISSN: 0040-4039, 1987, XP002491122

## Beschreibung

Die vorliegende Erfindung betrifft ein verbessertes Verfahren zur Herstellung von En-Addukten durch thermische Umsetzung von Olefinen ("Enen") mit vinylogen Carbonyl-Verbindungen ("Enophilen") wie Maleinsäure, Fumarsäure oder deren Anhydriden, wobei als Ene hochreaktive Polyisobutene mit einem zahlenmittleren Molekulargewicht Mₙ von 350 bis 50.000, insbesondere von 500 bis 5.000, und einem Gehalt von mindestens 70 Mol-% α-ständigen Doppelbindungen eingesetzt werden. Insbesondere können nach dem erfindungsgemäßen Verfahren Polyisobutylbemsteinsäureanhydride ("PIBSA") vorteilhaft hergestellt werden.

Üblicherweise werden PIBSA durch thermische Umsetzung von Polyisobutenen, insbesondere hochreaktiven Polyisobutenen, mit Maleinsäure oder Maleinsäureanhydrid unter direktem Erhitzen mit einer externen Wärmequelle wie einem Heizbad hergestellt, wie beispielsweise in der DE-A 27 02 604 (1) beschrieben. Solche Umsetzungen lassen sich auch in großtechnischem Maßstab durchführen.

Derartige Umsetzungen laufen jedoch fast nie ohne einen gewissen Anfall an Verunreinigungen und unerwünschten Nebenprodukten ab. So lässt sich die Bildung von beispielsweise unerwünschten zweifach maleinierten Polyisobutenen praktisch nicht unterdrücken, der Gehalt an zweifach maleinierten Polyisobutenen im Umsetzungsprodukt liegt in der Regel bei wenigen Gew.-% bis ca. 50 Gew.-%. Störender jedoch ist die Bildung von hauptsächlich durch Verkohlung entstandenen teerartigen Partikeln, die aus dem Umsetzungsprodukt nur durch Filtration entfernt werden können.

Die Herstellung von PIBSA auf thermischem Wege und auch von En-Addukten allgemein ist daher verbesserungsbedürftig, insbesondere sind höhere Umsätze, reinere Produkte ohne Verunreinigungen und unerwünschte Nebenprodukte sowie einheitlichere Produktstrukturen erwünscht, was beispielsweise auch die Folgeumsetzung der PIBSA zu entsprechenden als Kraft- und Schmierstoffadditive geeigneten Derivaten positiv beeinflusst und deren Qualität, insbesondere den Wirksubstanzanteil in diesen Derivaten, erhöht. Aufgabe der vorliegenden Erfindung war es somit, eine verbesserte Synthese für En-Addukte, insbesondere für Polyisobutylbemsteinsäureanhydride, bereitzustellen.

Demgemäß wurde ein verbessertes Verfahren zur Herstellung von En-Addukten durch thermische Umsetzung von Olefinen ("Enen") mit vinylogen Carbonyl-Verbindungen ("Enophilen"), wobei als Ene hochreaktive Polyisobutene mit einem zahlenmittleren Molekulargewicht Mₙ von 350 bis 50.000, insbesondere von 500 bis 5.000, und einem Gehalt von mindestens 70 Mol-% α-ständigen Doppelbindungen eingesetzt werden, gefunden, welches dadurch gekennzeichnet ist, dass man die Umsetzung unter Einsatz von Mikrowellen-Strahlung durchführt

Die sogenannten "Mikrowellen-unterstützten organischen Synthesen" sind seit einigen Jahren etablierte Herstellmethoden, insbesondere im Labormaßstab, für eine Reihe organischer Verbindungen. Einen umfassenden Überblick über diese Synthesemethoden für den Laborgebrauch gibt C. Oliver Kappe in Angew. Chemie 2004, 116, Seite 6408-6443 (2).

G. Majetich et al. beschreiben in ihrem Artikel "Applications of mircowave-accelerated organic synthesis" in Radiation Physics and Chemistry, Band 45 Nr. 4 (1995), Seite 567-579, ein Verfahren zur Herstellung von En-Addukten durch thermische Umsetzung von verschiedenen Enen mit vinylogen Carbonyl-Enophilen, wobei die thermische Umsetzung unter Einsatz von Mikrowellen-Strahlung erfolgt.

R. J. Giguere et al. beschreiben in ihrem Artikel "Studies on tandem ene/intramolecular Diels-Alder reactions" in Tetrahedron Letters, 28 (52), 6553-6 (1987), ein Verfahren zur Herstellung von En-Addukten durch thermische Umsetzung von Enen mit vinylogen Carbonyl-Enophilen, wobei die thermische Umsetzung unter Einsatz von Mikrowellen-Strahlung erfolgt.

R. Laurant, A. Laporterie, J. Dubac, J. Berlan, S. Lefeuvre und M. Audhuy beschreiben in J. Org. Chem. 1992, 57, Seite 7099-7102 (3) Ergebnisse von mikrowellen-unterstützten En-Reaktionen von Carbonyl-Enophilen mit Olefinen. So untersuchten die Autoren die Umsetzung von Diethylmesoxalat mit 1-Decen und mit β-Pinen sowie die intramolekulare Cyclisierung von Citronellal in einer offenen Reaktionsapparatur bei Einsatz von Mikrowellen-Strahlung im Vergleich zum direkten Erhitzen mit einer externen Wärmequelle. In allen Fällen wurde gefunden, dass der Umsatz und die Produktverteilung durch den Einsatz von Mikrowellen-Strahlung im Vergleich zum direkten Erhitzen mit einer externen Wärmequelle nicht beinflußt wurden. Die Mikrowellen-Methode brachte offensichtliche keine Vorteile für die hier untersuchten En-Reaktionen.

Es ist das Verdienst der vorliegenden Erfindung, das von den Autoren des Artikels (3) hinsichtlich der Anwendbarkeit der Mikrowellen-Technik für En-Reaktionen aufgestellte Vorurteil überwunden und die Vorteile der Mikrowellen-Technik für die thermische En-Reaktion von Olefinen mit vinylogen Carbonylverbindungen klar aufgezeigt zu haben.

Mikrowellen-Strahlung ist elektromagnetische Strahlung im Frequenzbereich von 0,3 bis 300 GHz. Wegen der weltweit verbreiteten Nutzung von Mikrowellen-Strahlung im Bereich der Kommunikationstechnik sind nach internationalen Vereinbarungen für die weiteren Anwendungen nur einige wenige Frequenzbereiche zugelassen, nämlich 433,92 MHz, 915 MHz, 2,45 GHz, 5,80 GHz und 24,125 GHz (sogenannte "ISM"-Frequenzen: "frequencies for industrial, scientific and medical use"). Hiervon ist die Frequenz 2,45 GHz (entsprechend einer Wellenlänge von 12,24 cm) am verbreitetsten.

Die Beschleunigung von chemischen Reaktionen durch Mikrowellen-Strahlung beruht auf der effizienten und gut kontrollierbaren Energieübertragung auf Reaktionsmedien und Reaktionsgemische durch das dielektrischen Erhitzen mit Mikrowellen. Diesem Phänomen liegt die Fähigkeit von bestimmten Stoffen (Solventien, Reagentien) zugrunde, Mikrowellen-Energie zu absorbieren und in Wärme umzuwandeln. Die elektrische Komponente eines elektromagnetischen Feldes bewirkt die Erwärmung hauptsächlich durch dipolare Polarisierung und Ionenleitung. Beim Bestrahlen mit Mikrowellen-Frequenzen richten sich die Dipole oder Ionen der Probe im angelegten Feld aus. Dieses Feld oszilliert, und da das Dipol- oder Ionenfeld versucht, sich mit dem wechselnden elektrischen Feld neu auszurichten, wird durch Molekularreibung und Dielektrizitätsverlust Energie in Form von Wärme frei. Die Aufheizcharakteristik eines bestimmten Stoffes oder Mediums hängt von seine dielektrischen Eigenschaften ab, in erster Näherung ist die Dielektrizitätskonstante ein Maß hierfür. Polare Substanzen sind in der Regel eher durch Mikrowellen-Strahlung erwärmbar als unpolare.

Im Vergleich zur durch Mikrowellen-Strahlung angeregten Erwärmung ist ein konventionelles Erwärmen durch direktes Heizen mit einer externen Wärmequelle, beispielsweise einer Flamme oder einem Ölbad, vergleichsweise langsam und ineffizient, da konventionelles Erwärmen von der thermischen Leitfähigkeit der zu durchdringenden Stoffe abhängt, was dazu führen kann, dass die Temperatur des Reaktionsgefäßes höher als die des Reaktionsgemisches sein kann. Dagegen wird bei der MikrowellenBestrahlung "von innen" erhitzt, indem die Mikrowellen-Energie direkt auf die Moleküle im Reaktionsgemisch übertragen wird.

Die Materialien für die bei der Mikrowellenbestrahlung verwendeten Reaktionsgefäße sind im allgemeinen unpolar und damit für Mikrowellen durchlässig oder nahezu durchlässig. Typische Materialien sind Quarz, Keramiken, Glimmer, hochreines Aluminiumoxid (Korund), einige spezielle Glassorten wie Borosilikatglas und vor allem Kunststoffe wie Fluorpolymere, z.B. Polytetrafluorethylen (Teflon). Die interne Wärmeübertragung minimiert Wandeffekte und Überhitzung von Gefäßoberflächen.

In der Anfangszeit der wissenschaftlichen Mikrowellen-Technologie wurden hauptsächlich Haushalts-Mikrowellenöfen für chemische Synthesen, die im Gramm-Maßstab durchgeführt wurden, eingesetzt. Mittlerweile bietet die Industrie für die Bedürfnisse der chemischen Industrie speziell entwickelte Mikrowellenreaktoren an, die Ansatzgrößen bis in den Kilogramm-Maßstab erlauben. Aufgrund der relativ geringen Eindringtiefe von Mikrowellenstrahlung in diese absorbierendes Material, welche üblicherweise in der Größenordnung von Zentimetern liegt, sind den Dimensionen solcher Mikrowellenreaktoren jedoch Grenzen gesetzt. Die Entwicklung von Mikrowellenreaktoren für den großtechnischen Maßstab, also für Ansatzgrößen im Tonnen-Maßstab, ist trotz der Problematik der Eindringtiefe der Strahlung jedoch schon so weit fortgeschritten, so dass die Mikrowellen-Technologie in wenigen Jahren Einzug in die chemische Großproduktion finden wird.

Man unterscheidet Multimode- und Monomode-Mikrowellenreaktoren. Multimode-Reaktoren sind wie Haushalts-Mikrowellenöfen aufgebaut: Die in den Reaktionsraum eintretenden Mikrowellen werden von den Wänden und der Beschickung über den normalerweise großen Innenraum reflektiert. In den meisten Geräten sorgt ein Modenrührer dafür, dass das Feld möglichst homogen verteilt ist. In den kleineren Innenräumen der Monomode-Reaktoren wird die elektromagnetische Strahlung durch eine meist exakt rechteckigen oder kreisförmigen Wellenleiter auf das in einem festen Abstand zur Strahlungsquelle montierte Reaktionsgefäß gerichtet, so dass eine stehende Welle entsteht.

Die Erzeugung der Mikrowellen-Strahlung in den Reaktoren erfolgt üblicherweise in Laufzeit-Röhren, insbesondere in Klystrons oder Magnetrons. Die Strahlung kann gepulst oder ungepulst abgegeben werden. Der Mikrowellen-Leistungseintrag kann prinzipiell über einen weiten Bereich erfolgen, typische Werte sind 200 bis 1200 Watt, insbesondere 250 bis 1000 Watt, vor allem 300 bis 600 Watt. Verlaufen die Umsetzungen exotherm, gelten die oben angegebenen Watt-Bereiche für die Aufheizphase; im Laufe der exothermen Umsetzung pendelt sich dann der Leistungseintrag zur Aufrechterhaltung der Temperatur bei niedrigeren Watt-Werten ein.

Die chemischen Umsetzungen in Mikrowellenreaktoren kann in offenen oder geschlossenen Reaktionsgefäßen durchgeführt werden. Offene Reaktionsgefäße sind beispielsweise Glaskolben mit aufgesetztem Rückflusskühler. Insbesondere sind jedoch Apparaturen, die mit geschlossenen Reaktionsgefäßen wie Autoklaven und Durchflußreaktoren arbeiten können, für die chemische Synthetik interessant. Mit den heute zur Verfügung stehenden Apparaturen und Techniken, welche in den meisten Fällen computergesteuert sind, können Temperatur und Druck in geschlossenen Reaktionsgefäßen sicher gesteuert und überwacht werden, so dass keine Sicherheitsrisiken auftreten. Da das Mikrowellenfeld im Reaktionsgefäß inhomogen sein kann, ist in der Regel bei diskontinuierlichen Apparaturen wie Glaskolben und Autoklaven ein Rühreinrichtung zur Durchmischung notwendig; bei Durchflussreaktoren erfolgt eine ausreichende Durchmischung üblicherweise automatisch durch die Strömung des Reaktionsmediums.

Da in geschlossenen Reaktionsgefäßen der Siedepunkt der flüchtigsten Komponente - meist des Lösungsmitteles - nicht mehr der temperaturlimitierende Faktor ist, wird bei derartigen Mikrowellen-unterstützten organischen Synthesen häufig die Überhitzungs-Fahrweise angewandt, um die Umsetzung aufgrund der erhöhten Reaktionstemperatur zu beschleunigen und in kürzerer Zeit den Umsatz zu vervollständigen. Hierbei sind üblicherweise Umsetzungstemperaturen erzielbar, die bis zu 100°C höher liegen können als der Siedepunkt von anwesenden Lösungsmitteln bei Normaldruck; je nach verwendeten Lösungsmitteln kann man so bei Umsetzungstemperaturen von 300°C oder mehr arbeiten.

Alle vorstehend genannten Mikrowellenreaktoren sind prinzipiell für die Durchführung der vorliegenden Erfindung geeignet. In einer bevorzugten Ausführungsform wird das erfindungsgemäße Verfahren jedoch in einem geschlossenen Reaktionsgefäß durchgeführt, insbesondere in einem Autoklaven oder einem Durchflussreaktor mit Druckaufbau und Druckkontrolle. Der Druckaufbau in einem geschlossenen Reaktionsgemäß kann durch Eigendruck infolge Erhitzens im abgeschlossenen Volumen oder durch vorher separat zugegebene gasförmige oder flüssige Substanzen erfolgen, welche inert sein oder Umsetzungskomponenten darstellen können.

Ein geschlossenes Reaktionsgefäß wird insbesondere auch dann bevorzugt, wenn verhindert werden soll, dass sich Einsatzstoffe oder Produkte während der Umsetzung in einem offenen Gefäß durch Sublimation abreichern, wie dies beispielsweise bei der Verwendung von sublimationsfähigem Maleinsäureanhydrid als Enophil der Fall ist.

Ein mögliche Ausführungsform eines Durchflussreaktors mit Druckaufbau und Druckkontrollen ist ein im Prinzip beliebig dimensionierbarer geschlossener Vorratstank mit einer Umlaufschleife, in die die Mikroweilen-erzeugende Einheit eingebaut ist. Die Mikrowellen-unterstützte chemische Umsetzung erfolgt somit in der klein dimensionierbaren Umlaufschleife. Das Reaktionsmedium im Vorratstank wird so lange durch die Umlaufschleife umgepumpt, bis der gewünschte Umsatz erzielt ist.

En-Addukte werden definitionsgemäß durch die Addition ("En-Reaktion") eines Olefins mit allylischer Doppelbindung ("En") an die π-Bindung einer ungesättigten Verbindung ("Enophil"), beispielsweise einer C=C-, C≡C-, C=O-, C=S- oder N=N-Bindung, hergestellt. Die Umsetzung erfolgt thermisch, d.h. durch Wärmezufuhr. Als Enophil fungieren bei der vorliegenden Erfindung vinyloge Carbonyl-Verbindungen, damit sollen hier Verbindungen mit dem Strukturelement C=C-C=O, C≡C-C=O oder N=N-CO gemeint sein. Die Anlagerung des Olefins erfolgt in der Regel an das zum Carbonylkohlenstoffatom β-ständige Kohlenstoff- bzw. Stickstoffatom, wobei sich die Doppelbindung des Olefins auf das allylständige Kohlenstoffatom im En verschiebt.

Als Olefine ("Ene") werden für das erfindungsgemäße Verfahren hochreaktive Polyisobutene mit einem zahlenmittleren Molekulargewicht Mₙ von 350 bis 50.000, insbesondere von 500 bis 5.000, und einem Gehalt von mindestens 70 Mol-%, insbesondere mindestens 75 Mol-%, vor allem mindestens 80 Mol-% α-ständigen Doppelbindungen eingesetzt.

Die so hergestellten PIBSA resultieren somit aus Polyisobutenen, welche eine für die Umsetzung mit entsprechenden Enophilen wie Maleinsäure bzw. Maleinsäureanhydrid sehr hohe Aktivität aufweisen. Bei dieser Umsetzung sind vor allem die olefinischen Endgruppen der Formel A (α-ständige Doppelbindungen oder terminale Vinyliden-Doppelbindungen) in den Polyisobutenen der Reaktion mit Enophilen wie Maleinsäure bzw. Maleinsäureanhydrid zugänglich. Aus diesem Grunde sind Polyisobutene mit einem möglichst hohen Gehalt an terminalen Vinyliden-Doppelbin-dungen (Formel A) als Ausgangsmaterial für die PIBSA besonders geeignet. Weiter innenliegende olefinische Doppelbindungen wie β-ständige Doppelbindungen der Formel B und γ-ständige Doppelbindungen der Formel C sind der Reaktion mit Enophilen wie Maleinsäure bzw. Maleinsäureanhydrid im allgemeinen weniger oder nicht zugänglich.

-CH₂-C(CH₃)₂-CH₂-C(CH₃)=CH₂ (A)

-CH₂-C(CH₃)₂-CH=C(CH₃)₂ (B)

-CH₂-C(CH₃)₂C(CH₃)-CH(CH₃)₂ (C)

Der Stand der Technik lehrt die Herstellung von Polyisobutenen mit hohen Gehalten an endständigen Doppelbindungen durch kationische Polymerisation von Isobuten oder isobutenhaltigen Kohlenwasserstoffströmen in Gegenwart von Bortrifluorid-Katalysatorkomplexen, beispielsweise in der Schrift (1) oder in der EP-A 632 061 (4). Dort werden werden Gehalte an endständigen Doppelbindungen von bis zu 90 Mol-% erreicht.

Die Herstellung hochreaktiver Polyisobutene mit einem Gehalt an terminalen Vinyliden-Doppelbindung von in der Regel mehr als 90 Mol-% ist in der internationalen Patentanmeldung WO 2007/057406 (5) beschrieben. Dort wird die Polymerisation von Isobuten in flüssiger Phase in Gegenwart bestimmter gelöster, dispergierter oder geträgerter metallhaltiger Katalysatorkomplexe, die in protonensaurer Form vorliegen können, beschrieben; typische Metall hierin sind Bor oder Aluminium. Derartige hochreaktive Polyisobutene eignen sich ebenfalls als Ene für das erfindungsgemäße Verfahren.

Die Herstellung weiterer hochreaktiver Polyisobutene, welche sich als Ene für das erfindungsgemäße Verfahren eignen, mit einem Gehalt an terminalen Vinyliden-Doppelbindung von in der Regel mehr als 90 Mol-% ist in der deutschen Patentanmeldung DE 10 2007 049 949 (6) beschrieben. Diese hochreaktiven Polyisobutene werden durch Dehydrohalogenierung von Polyisobutylhalogeniden unter Erhitzen in Gegenwart eines Lösungsmittels mit einer Dielektrizitätskonstante ε von weniger als 3 hergestellt.

Hochreaktive Polyisobutene, wie sie im Sinne der vorliegenden Erfindung als Edukte verstanden werden sollen, sind ganz oder überwiegend aus Isobuten-Einheiten aufgebaut. Bestehen sie zu 98 bis 100 Mol% aus Isobuten-Einheiten, liegen Isobuten-Homopolymere vor. Es können jedoch auch bis zu 20 Mol-% 1-Buten-Einheiten in den Polymerstrang mit eingebaut sein, ohne dass sich dadurch die Eigenschaften des hochreaktiven Polyisobutens wesentlich ändern. Weiterhin können bis zu 5 Mol-% weiterer olefinisch ungesättigter C₄-Monomerer wie 2-Butene oder Butadiene als Einheiten mit eingebaut sein, ohne dass sich dadurch die Eigenschaften des hochreaktiven Polyisobutens grundlegend ändern.

Für den Einsatz von Isobuten oder einem Isobuten-haltigen Monomerengemisch als zu polymerisierendem Monomer in einem der oben genannten Polyisobuten-Herstellverfahren kann als Isobuten-Quelle neben Rein-Isobuten auch ein technischer C₄-Kohlenwasserstoffstrom, vorzugsweise mit einem Isobuten-Gehalt von 1 bis 80 Gew.-% verwendet werden. Hierzu eignen sich insbesondere C₄-Raffinate (Raffinat 1, Raffinat 1 P und Raffinat 2), C₄-Schnitte aus der Isobutan-Dehydrierung, C₄-Schnitte aus Steamcrackern (nach der Butadienextraktion oder teilhydriert) und aus FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den C₄-Kohlenwasserstoffströmen im Bereich von 30 bis 70 Gew.-%, insbesondere von 40 bis 60 Gew.-%, wobei Raffinat 2- und des FCC-Ströme niedrigere Isobutenkonzentrationen aufweisen, gleichwohl jedoch für das erfindungsgemäße Verfahren geeignet sind. Das Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Als vinyloge Carbonyl-Verbindungen ("Enophile") mit dem Strukturelement C=C-C=O können entsprechende α,β-ungesättigte Ketone, Aldehyde oder insbesondere Carbonsäuren eingesetzt werden. Beispiele für solche Enophile sind But-2-en-3-on, Acrolein, Crotonaldehyd, Acrylsäure, Methacrylsäure, Maleinsäure, Fumarsäure oder deren Anhydride und Ester. Als Enophile mit dem Strukturelement C≡C-C=O können beispielsweise Propinsäure, Acetylendicarbonsäure oder deren Ester eingesetzt werden. Als Enophile mit dem Strukturelement N=N-C=O können beispielsweise Ester von Azodicarbonsäure eingesetzt werden.

In einer bevorzugten Ausführungsform des erfindungsgemäßen Verfahrens setzt man als Enophile Maleinsäure, Fumarsäure oder deren Anhydride ein.

Vorzugsweise setzt man erfindungsgemäß zur Herstellung von Polyisobutybernsteinsäureanhydriden mit einem durchschnittlichen molaren Verhältnis von Bernsteinsäureanhydrid-Gruppen zu Polyisobutyl-Gruppen von 1,0 : 1 bis 1,3 : 1 die genannten hochreaktiven Polyisobutene mit Maleinsäure oder Maleinsäureanhydrid im Mol-Verhältnis von 1 : 3 bis 1 : 0,95 um.

Die genannten hochreaktiven Polyisobutene werden bezüglich der Stöchiometrie in aus der konventionellen thermischen Umsetzug durch direktes Erhitzen mit einer externen Wärmequelle an sich bekannter Weise mit dem Enophil wie der Maleinsäure bzw. dem Maleinsäureanhydrid umgesetzt. Das Mol-Verhältnis von Polyisobutenen zu Enophil wie Maleinsäure bzw. Maleinsäureanhydrid beträgt dabei 1 : 3 bis 1 : 0,95, vorzugsweise 1 : 2 bis 1 : 0,98, insbesondere 1 : 1,4 bis 1 : 0,99, vor allem 1 : 1,2 bis 1 : 1, d.h. es liegt im Reaktionsmedium meist ein deutlicher oder ein leichter Überschuß an Enophil wie Maleinsäure bzw. Maleinsäureanhydrid vor. Überschüssiges Enophil wie unumgesetzte Maleinsäure bzw. unumgesetztes Maleinsäureanhydrid können im Bedarfsfall nach beendeter Umsetzung extraktiv oder destillativ, beispielsweise durch Strippen mit Inertgas bei erhöhter Temperatur und/oder unter vermindertem Druck, aus dem Reaktionsgemisch entfernt werden. Im Idealfall wird die Umsetzung aufgrund der nahezu vollständig verlaufende Umsetzung in äquimolarem oder annähernd äquimolarem Verhältnis beider Reaktionspartner durchgeführt.

Das erfindungsgemäße Verfahren wird in der Regel bei einer Reaktionstemperatur im Bereich von 100 bis 300°C, vorzugsweise im Bereich von 130 bis 270°C, insbesondere im Bereich von 150 bis 250°C, vor allem im Bereich von 160 bis 220°C, durchgeführt. Die Reaktionszeit liegt üblicherweise bei 30 Minuten bis 20 Stunden, vorzugsweise bei 45 Minuten bis 10 Stunden, insbesondere bei 1 bis 6 Stunden. Im Vergleich zu entsprechenden unter Verwendung von konventionellen externen Wärmequellen durchgeführten En-Reaktionen können die Reaktionszeiten bei Verwendung von Mikrowellen-Strahlung kürzer sein.

Das erfindungsgemäße Verfahren wird in der Regel unter Ausschluß von Sauerstoff und Feuchtigkeit durchgeführt, um unerwünschte Nebenreaktionen zu vermeiden. Allerdings kann der Umsetzungsgrad in Gegenwart von Luftsauerstoff oder wenigen ppm Halogen wie Brom höher liegen als unter Inert-Bedingungen. Vorzugsweise wird die Umsetzung jedoch mit entsprechend gereinigten Edukten in einer Inertgas-Atmosphäre, z.B. unter getrocknetem Stickstoff, durchgeführt, da man dann aufgrund der geringeren Bildung von Nebenprodukten normalerweise auf einen anschließenden Filtrationsschritt verzichten kann.

Im Prinzip ist die erfindungsgemäße Umsetzung der Olefine mit den vinylogen Carbonylverbindungen in Abwesenheit von separaten Lösungs- oder Verdünnungsmittel durchführbar. Gewünschtenfalls kann das erfindungsgemäße Verfahren jedoch auch in einem unter den Reaktionsbedingungen inerten Lösungsmittel durchgeführt werden, beispielsweise um eine geeignete Viskosität des Reaktionsmediums einzustellen oder um Kristallisation von Enophil wie Maleinsäure bzw. Maleinsäureanhydrid an kälteren Stellen des Reaktors zu vermeiden. Beispiele für geeignete Lösungsmittel sind aliphatische Kohlenwasserstoffe und Gemische hieraus, z.B. Naphtha, Petroleum oder Paraffine mit einem Siedepunkt oberhalb der Reaktionstemperatur, weiterhin aromatische Kohlenwasserstoffe und Halogenkohlenwasserstoffe, z.B. Toluol, Xylole, Isopropylbenzol, Chlorbenzol oder Dichlorbenzole, Ether wie Dimethyldiglykol oder Diethyldiglykol sowie Gemische der vorgenannten Lösungsmittel. Auch die Verfahrensprodukte selbst kommen als Lösungsmittel in Betracht.

Werden Lösungsmittel, beispielsweise relativ unpolare Lösungsmittel, mitverwendet, in die die Mikrowellen-Strahlung nur schwach einkoppelt, so dass eine trägere Aufheizcharakteristik für das Reaktionsmedium resultiert, kann die Aufheizung durch Zugabe von ionischen Flüssigkeiten, meist in Mengen von 0,01 bis 1 Gew.-%, bezogen auf das restliche Lösungsmittel, oder durch Einbringen eines einkupplungsfähigen Festkörpers, beispielsweise eines Siliziumcarbid-Formkörpers, in das Reaktionsmedium beschleunigt werden.

Gewünschtenfalls kann das erfindungsgemäße Verfahren in Anwesenheit mindestens einer Carbonsäure als Katalysator durchgeführt werden. Als Carbonsäuren kommen hierfür - wie in der Schrift (4) beschrieben - insbesondere aliphatische Dicarbonsäuren mit 2 bis 6 Kohlenstoffatomen in Betracht, z.B. Oxalsäure, Fumarsäure, Maleinsäure (im Falle des alleinigen Einsatzes von Maleinsäureanhydrid als Edukt) oder Adipinsäure. Auch Ester von niederen Monocarbonsäuren, beispielsweise Propionsäuremethylester, können als Katalysatoren eingesetzt werden. Die genannten Carbonsäuren oder Carbonsäure-Derivate können dem Reaktionsansatz direkt zugesetzt werden; im Falle von Maleinsäure kann diese auch durch Zugabe entsprechender Mengen Wasser aus Maleinsäureanhydrid unter den Reaktionsbedingungen gebildet werden. Die Mengen an Katalysator betragen hierbei in der Regel 1 bis 10 Mol-%, insbesondere 3 bis 8 Mol-%, jeweils bezogen auf eingesetztes Polyisobuten.

Die hochreaktiven Polyisobutene und Maleinsäure bzw. Maleinsäureanhydrid können vor der Reaktion vermischt und durch Erhitzen auf die Reaktionstemperatur umgesetzt werden. In einer weiteren Ausführungsform kann nur ein Teil der Maleinsäure bzw. des Maleinsäureanhydrids vorgelegt und der verbleibende Teil der Reaktionsmischung bei Reaktionstemperatur so zugesetzt werden, dass immer eine homogene Phase im Reaktor vorliegt. Nach Beendigung der Umsetzung wird das Verfahrensprodukt in an sich bekannter Weise aufgearbeitet, im allgemeinen werden hierzu alle flüchtigen Bestandteile abdestilliert und der Destillationsrückstand wird isoliert. Die nach dem erfindungsgemäßen Verfahren hergestellten Polyisobutylbernsteinsäureanhydride fallend teerfrei oder weitgehend teerfrei an, was in der Regel eine Weiterverarbeitung dieser Produkte ohne weitere Reinigungsmaßnahmen erlaubt. Insbesondere treten im Vergleich zum konventionellen Heizen mit einer externen Wärmequelle keine oder zumindest deutlich weniger teerartige oder koksartige Ablagerungen an den Innenwänden des Reaktionsgefäßes auf. Auch der Gehalt an unerwünschten Nebenprodukten (einschließlich zweifach maleinierter Polyisobutylene) im Reaktionsgemisch selbst ist deutlich geringer.

In einer weiteren bevorzugten Ausführungsform der vorliegenden Erfindung führt man die Umsetzung der Olefine mit den vinylogen Carbonylverbindungen unter Einsatz von Mikrowellen-Strahlung durch und kühlt das Reaktionsgefäß gleichzeitig von außen durch ein strömendes kälteres Medium. Typischerweise setzt man als strömendes kälteres Medium eine strömende Flüssigkeit, insbesondere eine Wärmeträgerflüssigkeit mit hoher Wärmeaufnahmekapazität in Form eines Öls, oder ein strömendes Gas, insbesondere Luft, vorzugsweise in Form von Pressluft, ein. Das strömende Medium wird zweckmäßigerweise durch einen vom eigentlichen Reaktionsgemisch isolierten äußeren Kühlmantel des Reaktionsgefäßes geleitet. Bei geeigneter Wahl des strömenden kälteren Mediums wird dieses nicht durch die es durchdringende Mikrowellen-Strahlung erwärmt.

Die nach dem erfindungsgemäßen Verfahren hergestellten PIBSA können in an sich bekannter Weise durch Umsetzung mit Aminen, Alkoholen oder Aminoalkoholen üblicherweise unter Wasserabspaltung in entsprechende Polyisobutylbernsteinsäureanhydrid-Derivate, welche wenigstens eine primäre oder sekundäre Aminogruppe, eine Iminogruppe und/oder eine Hydroxylgruppe aufweisen, übergeführt werden. Derartige Derivate eignen sich als Additive in Kraft- und Schmierstoffzusammensetzungen. Bei diesen Derivaten handelt es sich meistens um Halbamide, Amide, Imide, Ester oder gemischte Amid-Ester der Polyisobutylbernsteinsäuren. Imide sind hierbei besonders von Interesse. Bei Einsatz von Aminen oder Aminoalkoholen kann die zweite nicht amidierte oder veresterte Carboxylgruppe in den Derivaten auch in Form der entsprechenden Ammoniumcarboxylate vorliegen.

Bei Aminen als Umsetzungspartner handelt es sich vorzugsweise um prinzipiell zur Imidbildung befähigte Verbindungen, also neben Ammoniak um Verbindungen mit einer oder mehreren primären oder sekundären Aminogruppen. Es können mono- oder dialiphatische Amine, cycloaliphatische Amine oder aromatische Amine eingesetzt werden. Von besonderem Interesse sind Polyamine, insbesondere aliphatische Polyamine mit 2 bis 10, vor allem 2 bis 6 Stickstoffatomen, mit mindestens einer primären oder sekundären Aminogruppe. Diese aliphatischen Polyamine tragen Alkylengruppen wie Ethylen, 1,2-Propylen oder 2,2-Dimethylpropylen, Beispiele für solche Verbindungen sind Ethylendiamin, Diethylentriamin, Triethylentetramin, Tetraethylenpentamin, Pentaethylenhexamin, Dipropylentriamin, Tripropylentetramin und N,N-Dimethylpropylen-1,3-diamin.

Weitere zur Umsetzung mit den erfindungsgemäß hergestellten PIBSA geeignete Polyamine sind beispielsweise auch N-Amino-C₁-C₆-alkyl-piperazine wie 4-(2-Aminoethyl)-piperazin.

Ebenfalls zur Umsetzung mit den erfindungsgemäß hergestellten PIBSA geeignete Amine sind beispielsweise Monoalkylamine und Alkylenamine, in denen die Alkyl- oder Alkylenreste durch ein oder mehrere, nicht benachbarte Sauerstoffatome unterbrochen sind die gegebenenfalls auch Hydoxylgruppen und/oder weitere Aminogruppen aufweisen können, z.B. 4,7-Dioxadecan-1,10-diamin, 2-(2-Aminoethoxy)ethanol oder N-(2-Aminoethyl)ethanolamin.

Als zur Umsetzung mit den erfindungsgemäß hergestellten PIBSA geeignete Alkohole sind beispielsweise Di- oder Polyole mit vorzugsweise 2 bis 5 Hydroxylgruppen, z.B. Ethylenglykol, Glycerin, Diglycerin, Triglycerin, Trimethylolpropan, Pentaerythrit sowie ethoxylierte und/oder propoxylierte Derivate dieser Di- oder Polyole.

Als zur Umsetzung mit den erfindungsgemäß hergestellten PIBSA geeignete Aminoalkohole sind beispielsweise Alkanolamine wie Ethanolamin und 3-Aminopropanol.

Als zur Umsetzung mit den erfindungsgemäß hergestellten PIBSA geeignet sind auch ethoxylierte und/oder propoxylierte Derivate der genannten Amine und Aminoalkohole.

Das Molverhältnis von PIBSA zu den genannten Aminen, Alkoholen oder Aminoalkoholen liegt bei der Umsetzung in der Regel im Bereich von 0,4 : 1 bis 4 : 1, vorzugsweise 0,5 : 1 bis 3 : 1. Bei Verbindungen mit nur einer primären oder sekundären Aminogruppe wird man häufig wenigstens äquimolare Mengen an Amin einsetzen.

Bei Verwendung von primären Aminen können sich durch Reaktion mit der Maleinsäureanhydrid-Gruppierung Amid- und/oder Imid-Strukturen bilden, wobei die Reaktionsbedingungen vorzugsweise so gewählt werden, dass sich Imid-Strukturen ausbilden, da die dabei erhaltenen Produkte aufgrund ihrer besseren anwendungstechnischen Eigenschaften bevorzugt sind.

Amine mit zwei Aminogruppen, vorzugsweise mit zwei primären Aminogruppen, sind auch zur Ausbildung von entsprechenden Bisamiden bzw. Bisimiden in der Lage. Vorzugsweise wird man zur Herstellung der Bisimide das Amin in etwa der hierzu notwendigen Stöchiometrie einsetzen. Üblicherweise setzt man hierbei diese Diamine in einer Menge von weniger als 1 Mol, insbesondere in einer Menge von 0,3 bis 0,95 Mol, vor allem in einer Menge von 0,4 bis 0,9 Mol je Mol PIBSA ein.

Die Umsetzung der PIBSA mit den genannten Aminen, Alkoholen bzw. Aminoalkoholen wird je nach Reaktivität der ausgewählten Reaktionspartner normalerweise bei einer Temperatur im Bereich von 25 bis 300°C, insbesondere im Bereich von 50 bis 200°C, vor allem im Bereich von 70 bis 170°C, gegebenenfalls unter Verwendung eines üblichen Amidierungskatalysators, durchgeführt. Überschüssiges Amin bzw. überschüssiger Alkohol oder Aminoalkohol kann gegebenenfalls nach beendeter Umsetzung extraktiv oder destillativ, beispielsweise durch Strippen mit Inertgas bei erhöhter Temperatur und/oder unter vermindertem Druck, aus dem Reaktionsgemisch entfernt werden. Vorzugsweise führt man die Reaktion bis zu einem Umsatz der Komponenten von wenigstens 90, insbesondere 95 %, durch (jeweils bezogen auf die im Unterschuß eingesetzte Komponente), wobei der Reaktionsfortschritt anhand der Wasserbildung mittels üblicher analytischer Methoden verfolgt werden kann, beispielsweise über die Säurezahl. Die Bildung von Verbindungen mit Imid-Struktur aus solchen mit Amid-Struktur lässt sich mittels Infrarot-Spektroskopie verfolgen.

Die beschriebenen PIBSA-Derivate zeichnen sich durch ein verbessertes Viskositätsverhalten bei zumindest vergleichbarer Dispergierwirkung wie entsprechende kommerzielle Produkte mit vergleichbarem zahlenmittleren Molekulargewicht aus. Sie können daher in höheren Konzentrationen in Schmierstoffzusammensetzungen eingesetzt werden als die genannten kommerziellen Dispergatoren, ohne dass Nachteile im Viskositätsverhalten des Schmierstoffes zu befürchten sind, was insbesondere im Hinblick auf verlängerte Ölwechselintervalle von Interesse ist.

Unter Schmierstoffzusammensetzungen sollen hier alle üblichen, in der Regel flüssigen Schmierstoffzusammensetzungen verstanden werden. Die wirtschaftlich bedeutsamsten Schmierstoffzusammensetzungen sind Motorenöle sowie Getriebe-, Schalt- und Automatiköle. Motorenöle bestehen üblicherweise aus mineralischen Grundölen, welche überwiegend paraffinische Bestandteile enthalten und durch aufwendige Aufarbeitungs- und Reinigungsprozesse in der Raffinerie hergestellt werden, mit einem Anteil von normalerweise ca. 2 bis 10 Gew.-% an Additiven (bezogen auf die Wirksubstanz-Gehalte). Für spezielle Anwendungen, beispielsweise Hochtemperatur-Einsätze, können die mineralischen Grundöle teilweise oder vollständig durch synthetische Komponenten wie organische Ester, synthetische Kohlenwasserstoffe wie Olefinoligomere, Poly-α-Olefine oder Polyolefine oder Hydrocrack-Öle ersetzt sein. Motorenöle müssen auch bei hohen Temperaturen ausreichend hohe Viskositäten aufweisen, um einen einwandfreien Schmiereffekt und eine gute Abdichtung zwischen Zylinder und Kolben zu gewährleisten. Weiterhin müssen Motorenöle von ihren Fließeigenschaften auch so beschaffen sein, dass bei niedrigen Temperaturen der Motor problemlos gestartet werden kann. Motorenöle müssen oxidationsstabil sein und dürfen auch unter schweren Arbeitsbedingungen nur wenig Zersetzungsprodukte in flüssiger oder fester Form sowie Ablagerungen erzeugen. Motorenöle dispergieren Feststoffe (Dispersant-Verhalten), verhindern Ablagerungen (Detergent-Verhalten), neutralisieren saure Reaktionsprodukte und bilden einen Verschleißschutzfilm auf den Metalloberflächen im Motor aus. Motorenöle für Verbrennungsmotoren, insbesondere für Otto-, Wankel-, Zweitakt- und Dieselmotoren, werden üblicherweise nach Viskositätsklassen-Klassen (SAE-Klassen) charakterisiert; von besonderem Interesse sind hierbei Leichtlaufmotorenöle, speziell der Viskositätsklassen SAE 5 W bis 20 W nach DIN 51511.

Getriebe-, Schalt- und Automatiköle sind bezügliche ihrer Grundkomponenten und Additive ähnlich wie Motorenöle zusammengesetzt. Die Kraftübertragung im Zahnradsystem von Getrieben erfolgt zu einem hohen Anteil durch den Flüssigkeitsdruck im Getriebeöl zwischen den Zähnen. Das Getriebeöl muß demzufolge so beschaffen sein, dass es auf Dauer hohe Drücke aushält, ohne sich zu zersetzen. Neben den Viskositätseigenschaften sind hier Verschleiß, Druckfestigkeit, Reibung, Scherstabilität, Traktion und Einlaufverhalten die entscheidenden Größen.

Die genannten Schmierstoffzusammensetzungen enthalten die beschriebenen PIBSA-Derivate in einer Menge von üblicherweise 0,001 bis 20 Gew.-%, vorzugsweise 0,01 bis 10 Gew.-%, insbesondere 0,05 bis 8 Gew.-% und vor allem 0,1 bis 5 Gew.-%, bezogen auf die Gesamtmenge der Schmierstoffzusammensetzung.

Die genannten Schmierstoffzusammensetzungen können in üblicher Weise additiviert sein, d.h. sie enthalten neben den für ihren Verwendungszweck typischen Grundölkomponenten wie mineralischen oder synthetischen Kohlenwasserstoffen, Polyether oder Ester oder Mischungen hieraus noch übliche von Dispergatoren verschiedene Additive wie Detergensadditive (HD Additive), Antioxidantien, Viskositätsindexverminderer, Pour Point Erniedriger (Kaltfließverbesserer), Hochdruckadditive (Extreme Pressure Additive), Reibungsverminderer (Friction Modifier), Antischaum-Additive (Entschäumer), Korrosionsinhibitoren (Metalldeaktivatoren), Emulgatoren, Farbstoffe und Fluoreszenzadditive, Konservierungsmittel und/oder Geruchsverbesserer in den hierfür üblichen Mengen. Selbstverständlich können die beschriebenen PIBSA-Derivate in den Schmierstoffzusammensetzungen auch zusammen mit anderen Additiven mit Dispergierwirkung, insbesondere mit aschefreien Additiven mit Dispergierwirkung, eingesetzt werden, wobei der Anteil der beschriebenen PIBSA-Derivate an der Gesamtmenge an dispergieraktiven Additiven in der Regel wenigstens 30 Gew.-%, insbesondere wenigstens 60 Gew.-% beträgt.

Die beschriebenen PIBSA-Derivate finden auch Anwendung als Detergentien in Kraftstoffzusammensetzungen, insbesondere in Otto- und Mitteldestillat-Kraftstoffen, und verringern oder verhindern in dieser Anwendung Ablagerungen im Kraftstoffsystem und/oder Verbrennungssystem von insbesondere Otto- und Dieselmotoren.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Als Mitteldestillat-Kraftstoffe kommen alle handelsüblichen Dieselkraftstoff- und Heizölzusammensetzungen in Betracht. Bei Dieselkraftstoffen handelt es sich üblicherweise um Erdölraffinate, die in der Regel einen Siedebereich von 100 bis 400°C haben. Dies sind meist Destillate mit einem 95%-Punkt bis zu 360°C oder auch darüber hinaus. Dies können aber auch sogenannte "Ultra low sulfur diesel" oder "City diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen Dieselkraftstoffen, deren Hauptbestandteile längerkettige Paraffine darstellen, sind solche, die durch Kohlevergasung oder Gasverflüssigung ["gas to liquid" (GTL) Kraftstoffe] erhältlich sind, geeignet. Geeignet sind auch Mischungen der vorstehend genannten Dieselkraftstoffe mit regenerativen Kraftstoffen wie Biodiesel oder Bioethanol. Von besonderem Interesse sind gegenwärtig Dieselkraftstoffe mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel. Dieselkraftstoffe können auch Wasser, z.B. in einer Menge bis zu 20 Gew.-%, enthalten, beispielsweise in Form von Diesel-Wasser-Mikroemulsionen oder als sogenannter "White Diesel".

Bei Heizölen handelt es sich beispielsweise um schwefelarme oder schwefelreiche Erdölraffinate oder um Stein- oder Braunkohledestillate, die üblicherweise einen Siedebereich von 150 bis 400°C aufweisen. Bei Heizölen kann es sich um Standard-Heizöl gemäß DIN 51603-1 handeln, das einen Schwefelgehalt von 0,005 bis 0,2 Gew.-% besitzt, oder es handelt sich um schwefelarme Heizöle mit einem Schwefelgehalt von 0 bis 0,005 Gew.-%. Als Beispiele für Heizöl sei insbesondere Heizöl für häusliche Ölfeuerungsanlagen oder Heizöl EL genannt.

Die beschriebenen PIBSA-Derivate können entweder dem jeweiligen Grundkraftstoff, insbesondere dem Otto- oder dem Dieselkraftstoff, allein oder in Form von Kraftstoffadditiv-Paketen, z.B. den sogenannten Gasoline- oder Diesel-Performance-Paketen, zugesetzt werden. Derartige Pakete stellen Kraftstoffadditiv-Konzentrate dar und enthalten in der Regel neben Lösungsmitteln noch eine Reihe weiterer Komponenten als Coadditive, beispielsweise Trägeröle, Kaltfließverbesserer, Korrosionsinhibitoren, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Lösungsvermittler, Marker und/oder Farbstoffe in den hierfür üblichen Mengen. Selbstverständlich können die beschriebenen PIBSA-Derivate in den Kraftstoffzusammensetzungen auch zusammen mit anderen Additiven mit Detergenswirkung eingesetzt werden, wobei der Anteil der beschriebenen PIBSA-Derivate an der Gesamtmenge an Additiven mit Detergenswirkung in der Regel wenigstens 30 Gew.-%, insbesondere wenigstens 60 Gew.-% beträgt.

Die genannten Kraftstoffzusammensetzungen enthalten die beschriebenen PIBSA-Derivate in einer Menge von üblicherweise 10 bis 5000 Gew.-ppm, vorzugsweise 20 bis 2000 Gew.-ppm, insbesondere 50 bis 1000 Gew.-ppm und vor allem 100 bis 400 Gew.-ppm, bezogen auf die Gesamtmenge der Kraftstoffzusammensetzung.

Das erfindungsgemäße Verfahren zur Herstellung von En-Addukten, insbesondere von Polyisobutylbernsteinsäureanhydriden, zeichnet sich durch höhere Umsätze, reinere Produkte und einheitlichere Produktstrukturen aus, was auch die Folgeumsetzung der PIBSA zu den entsprechenden als Kraft- und Schmierstoffadditive geeigneten Derivaten positiv beeinflusst und deren Qualität, insbesondere den Wirksubstanzanteil in diesen Derivaten, erhöht. So zeichnen sich die hieraus erhaltenen PIBSA-Derivate insbesondere durch ein verbessertes Viskositätsverhalten bei zumindest vergleichbarer Dispergierwirkung wie entsprechende kommerzielle Produkte mit vergleichbarem zahlenmittleren Molekulargewicht aus. Sie können daher in höheren Konzentrationen in Schmierstoffzusammensetzungen eingesetzt werden als die genannten kommerziellen Dispergatoren, ohne dass Nachteile im Viskositätsverhalten des Schmierstoffes zu befürchten sind, was insbesondere im Hinblick auf verlängerte Ölwechselintervalle von Interesse ist.

Insbesondere jedoch lässt sich die im allgemeinen unerwünschte Bildung von zweifach mit der Enophil-Komponente umgesetzten Enen, insbesondere von zweifach maleinierten Polyisobutenen, steuern oder unterdrücken. Weiterhin fallen die nach dem erfindungsgemäßen Verfahren hergestellten PIBSA teerfrei oder weitgehend teerfrei an, was in der Regel eine Weiterverarbeitung dieser Produkte ohne weitere Reinigungsmaßnahmen wie Abfiltration der Teer-Partikel erlaubt.

Die nachfolgenden Beispiel sollen die vorliegende Erfindung erläutern, ohne sie zu beschränken.

### Versuch 1 bis 5: Herstellung von Polyisobutylbernsteinsäureanhydrid

Die in der nachfolgenden Tabelle jeweils angegebenen Mengen an hochreaktivem Polyisobuten ("PIB") (Glissopal® 1000 der BASF Aktiengesellschaft: Mₙ = 1000, Gehalt an α-ständigen Doppelbindungen: 80 Mol-%) und Maleinsäureanhydrid ("MSA") wurden in einem 20 ml-Mikrowellen-Gefäß der Fa. Biotage in einem Wasserbad auf 70°C erwärmt, so dass man eine niederviskose, rührbare Emulsion erhielt. Diese Emulsion wurde jeweils anschließend direkt in einen geschlossenen Mikrowellen-Reaktor der Typs Biotage Initiator 2.0 8EXP (verwendete Frequenz: 2,45 GHz) gebracht und dort für 1 Minute mit 330 Umdrehungen pro Minute gerührt. Anschließend wurde die Probe jeweils 30 Minuten zur Aufheizung mit einer Leistung von 400 Watt bestrahlt, es stellte jeweils sich eine Temperatur von 210°C ein (IR-spektroskopisch gemessen an der inneren Gefäßoberfläche des Reaktors). Diese Temperatur wurde jeweils durch Fortsetzung der Bestrahlung für weitere 5 ½ Stunden unter Rühren bei der oben genannten Drehzahl beibehalten, wobei sich die Bestrahlungsleistung zur Aufrechterhaltung der Temperatur bei ca. 100 Watt einpendelte. Danach wurde die Probe jeweils durch äußeres Kühlen mit Druckluft auf unter 50°C gebracht und aufgearbeitet (erfindungsgemäße Versuche 3 bis 5).

Zum Vergleich wurde Polyisobutylbernsteinsäureanhydrid aus den gleichen Edukten auch durch konventionelles 6stündiges Erhitzen unter Rühren in einem geschlossenen Kolben mit einem Heizbad auf 210°C (gemessen mit einem in das Reaktionsmedium eintauchenden Innenthermometer) hergestellt (Vergleichsversuche 1 und 2).

Die nachfolgende Tabelle zeigt die jeweiligen Einsatzmengen und die Ergebnisse der Versuche:

| Vers.-Nr.: | 1 | 2 | 3 | 4 | 5 |
|---|---|---|---|---|---|
| | | | | | |
| Menge PIB [g] | 17 | 17 | 17 | 17 | 17 |
| Menge MSA [g] | 2,0 | 2,3 | 2,0 | 2,3 | 1,6 |
| Mol-Verh. PIB:MSA | 1:1,2 | 1:1,4 | 1:1,2 | 1:1,4 | 1:1,0 |
| | | | | | |
| Rückstandsbildung | wenig | viel | keine | keine | keine |
| | | | | | |
| Umsatz PIB [%] | 67 | 82 | 81 | 85 | 77 |
| | | | | | |
| Aktive acide Gruppen [mg KOH / g] | 75 | 99 | 92 | 103 | 80 |
| Anteil Bismaleinierungsprodukt [Gew.-%] | 11 | 19 | 13 | 16 | 2 |

Bei den erfindungsgemäßen Mikrowellen-unterstützten Versuchen 3 bis 5 wurden - im Gegensatz zu den Vergleichsversuchen 1 und 2 - keine teer- oder koksartigen Rückstände an der Innenwand des Reaktionsgefäßes gefunden.

Beim Vergleich der Ergebnisse des Vergleichsversuches 1 und des entsprechenden erfindungsgemäßen Versuches 3 ist zwar der Anteil an unerwünschtem Bismaleinierungsprodukt (zweifach maleinierten Polyisobutylenen) bei der Mikrowellen-unterstützten Synthese geringfügig höher, dies ist jedoch bei dem deutlich höheren Umsatz (und damit deutlich höherem Gehalt an aktiven aciden Gruppen) im Falle des erfindungsgemäßen Versuches 3 nicht verwunderlich, da der Anteil an Bismaleinierungsprodukt generell mit dem Umsatz steigt.

Beim Vergleich der Ergebnisse des Vergleichsversuches 2 und des entsprechenden erfindungsgemäßen Versuches 4 ist dagegen der Anteil an unerwünschtem Bismaleinierungsprodukt bei der Mikrowellen-unterstützten Synthese auch bei höherem Umsatz niedriger.

Den niedrigsten Anteil an unerwünschtem Bismaleinierungsprodukt bei der Mikrowellen-unterstützten Synthese erzielt man bei äquimolarem Einsatz von PIB und MSA (erfindungsgemäßer Versuch 5).

## Patentansprüche

1. Verfahren zur Herstellung von En-Addukten durch thermische Umsetzung von Olefinen ("Enen") mit vinylogen Carbonyl-Verbindungen ("Enophilen"), wobei als Ene hochreaktive Polyisobutene mit einem zahlenmittleren Molekulargewicht Mₙ von 350 bis 50.000, insbesondere von 500 bis 5.000, und einem Gehalt von mindestens 70 Mol-% α-ständigen Doppelbindungen eingesetzt werden, **dadurch gekennzeichnet, dass** man die Umsetzung unter Einsatz von Mikrowellen-Strahlung durchführt.

2. Verfahren zur Herstellung von En-Addukten nach Anspruch 1, wobei als Enophile Maleinsäure, Fumarsäure oder deren Anhydride eingesetzt werden.

3. Verfahren zur Herstellung von En-Addukten nach Anspruch 1 oder 2, bei dem zur Herstellung von Polyisobutylbernsteinsäureanhydriden mit einem durchschnittlichen molaren Verhältnis von Bernsteinsäureanhydrid-Gruppen zu Polyisobutyl-Gruppen von 1,0 : 1 bis 1,3 : 1 die hochreaktiven Polyisobutene mit Maleinsäure oder Maleinsäureanhydrid im Mol-Verhältnis von 1 : 3 bis 1 : 0,95 umgesetzt werden.

4. Verfahren zur Herstellung von En-Addukten nach den Ansprüchen 1 bis 3 durch thermische Umsetzung der Ene mit den Enophilen bei Temperaturen von 100 bis 300°C.

5. Verfahren zur Herstellung von En-Addukten nach den Ansprüchen 1 bis 4, **dadurch gekennzeichnet, dass** man die Umsetzung in einem geschlossenem Reaktionsgefäß durchführt.

6. Verfahren zur Herstellung von En-Addukten nach den Ansprüchen 1 bis 5, **dadurch gekennzeichnet, dass** man die Umsetzung unter Einsatz von Mikrowellen-Strahlung durchführt und das Reaktionsgefäß gleichzeitig von außen durch ein strömendes kälteres Medium kühlt.

## Claims

1. A process for preparing ene adducts by thermal reaction of olefins ("enes") with vinylic carbonyl compounds ("enophiles"), wherein the enes used are high-reactivity polyisobutenes having a number-average molecular weight Mₙ of from 350 to 50 000, especially from 500 to 5000, and a content of at least 70 mol% of α-double bonds, which comprises performing the reaction using microwave radiation.

2. The process for preparing ene adducts according to claim 1, wherein the enophiles used are maleic acid, fumaric acid or the anhydrides thereof.

3. The process for preparing ene adducts according to claim 1 or 2, in which polyisobutylsuccinic anhydrides having an average molar ratio of succinic anhydride groups to polyisobutyl groups of from 1.0 : 1 to 1.3 : 1 are prepared by reacting the high-reactivity polyisobutenes with maleic acid or maleic anhydride in a molar ratio of from 1 : 3 to 1 : 0.95.

4. The process for preparing ene adducts according to claims 1 to 3 by thermally reacting the enes with the enophiles at temperatures of from 100 to 300°C.

5. The process for preparing ene adducts according to claims 1 to 4, wherein the reaction is performed in a closed reaction vessel.

6. The process for preparing ene adducts according to claims 1 to 5, wherein the reaction is performed using microwave radiation and the reaction vessel is simultaneously cooled externally by a flowing colder medium.

## Revendications

1. Procédé pour la préparation de produits d'addition ène par transformation thermique d'oléfines ("ènes") avec des composés carbonyle vinyliques ("énophiles") en utilisant comme ènes des polyisobutènes hautement réactifs présentant un poids moléculaire numérique moyen Mₙ de 350 à 50 000, en particulier de 500 à 5000, et une teneur d'au moins 70% en mole de doubles liaisons en position α, **caractérisé en ce qu'**on réalise la transformation avec utilisation d'un rayonnement de micro-ondes.

2. Procédé pour la préparation des produits d'addition ène selon la revendication 1, en utilisant comme énophiles l'acide maléique, l'acide fumarique ou leurs anhydrides.

3. Procédé pour la préparation de produits d'addition ène selon la revendication 1 ou 2, dans lequel on transforme, pour la préparation d'anhydrides de l'acide polyisobutylsuccinique présentant un rapport molaire moyen de groupes anhydride de l'acide succinique aux groupes polyisobutyle de 1,0:1 à 1,3:1, les polyisobutènes hautement réactifs avec de l'acide maléique ou de l'anhydride de l'acide maléique dans un rapport molaire de 1:3 à 1:0,95.

4. Procédé pour la préparation de produits d'addition ène selon les revendications 1 à 3 par transformation thermique des ènes avec les énophiles à des températures de 100 à 300°C.

5. Procédé pour la préparation de produits d'addition ène selon les revendications 1 à 4, **caractérisé en ce qu'**on réalise la transformation dans un récipient de réaction fermé.

6. Procédé pour la préparation de produits d'addition ène selon les revendications 1 à 5, **caractérisé en ce qu'**on réalise la transformation avec utilisation d'un rayonnement par des micro-ondes et on refroidit simultanément le récipient de réaction à partir de l'extérieur par un milieu plus froid qui s'écoule.
